# EUROPÄISCHE PATENTANMELDUNG

(11) **EP 2 559 543 A1**
(43) Veröffentlichungstag der Anmeldung: **20.02.2013**
(21) Anmeldenummer: 12005690.8
(22) Anmeldetag: 04.08.2012
(51) Int. Cl.: B29C 45/27, B29C 45/33

(54) **Formwerkzeug für die Herstellung eines Transportbehälters aus Kunstsoff**

(30) Priorität: 15.08.2011 DE 102011110141
(71) Anmelder: Georg Utz Holding AG, 5620 Bremgarten (CH)
(72) Erfinder: Ritzberger, Axel, 8852 Altendorf (CH)
(74) Vertreter: Röther, Peter

(57) **Zusammenfassung**

Die Erfindung betrifft ein Formwerkzeug für die Herstellung eines Transportbehälters aus Kunststoff in einer Spritzgießmaschine, wobei eine Hälfte des Formwerkzeugs an einer beweglichen Formaufspannplatte und die andere Hälfte an einer feststehenden Formaufspannplatte befestigt ist und die feststehende Formaufspannplatte eine Angussöffnung für ein Plastifizier- und Einspritzaggregat aufweist, das dadurch gekennzeichnet ist, dass die die Aussenbereiche des Behälters formende Formwerkzeughälfte, die aus einem die Bodenunterseite des Behälters formenden Teil und aus vier die Aussenflächen der Seitenwände formenden, seitlich verfahrbaren Backen besteht, an der beweglichen Formaufspannplatte und die den Innenbereich des Behälters formende Formwerkzeughälfte an der feststehenden Formaufspannplatte angeordnet ist, wobei in dieser Formwerkzeughälfte von der Angussöffnung ausgehende Angusskanäle sowohl in den Bodenbereich als auch in den Seitenwandbereich des zu spritzenden Behälters verlaufen.

## Beschreibung

Die Erfindung betrifft ein Formwerkzeug für die Herstellung eines Transportbehälters aus Kunststoff in einer Spritzgießmaschine, wobei eine Hälfte des Formwerkzeugs an einer beweglichen Formaufspannplatte und die andere Hälfte an einer feststehenden Formaufspannplatte befestigt ist und die feststehende Formaufspannplatte eine Angussöffnung für ein Plastifizier- und Einspritzaggregat aufweist.

Mit dem Plastifizier- und Einspritzaggregat wird der Kunststoff aufgeschmolzen und in den Hohlraum des geschlossenen Werkzeugs eingespritzt, wo der Kunststoff dann abkühlt, die Kontur des Hohlraumes einnimmt und dann entformt werden kann.

Dabei ist bislang das Formwerkzeug so in der Maschine angeordnet, dass der Anspritzpunkt/die Anspritzpunkte an der Bodenunterseite des zu spritzenden Formlings angeordnet ist/sind. Dabei kann grundsätzlich das Formteil über einen Anguss mittig angespritzt werden. Der Fließweg bis in die Ecken und zusätzlich noch bis zu den obersten Bereichen der Seitenwände bedingt einen hohen Spritzdruck, damit hohe Zuhaltekräfte und große-teuere Maschinen.

Zur Reduzierung des Spritzdrucks bzw. der Zuhaltekraft sind mehrere Anspritzpunkte oft in den Eckbereichen angeordnet, so dass statt eines Anspritzpunktes in der Mitte beispielsweise vier Anspritzpunkte in den Ecken vorhanden sind. Bei hohen Seitenwänden und langen Fließwegen ist trotz der Anspritzpunkte in den Ecken ein hoher Spritzdruck erforderlich, wodurch im Spritzgußteil hohe Spannungen entstehen, welche nach der Entformung beispielsweise zu Deformationen oder, bei HDPE, sogar zu Spannungsrissen führen können. Durch Deformationen kann der Kraftfluss verschlechtert werden und durch Spannungsrisse können Kunststoffteile sogar komplett versagen.

Es ist zwar denkbar den Spritzdruck in den Seitenwänden zu verringern, indem eine direkte Anspritzung in die Seitenwand über die feste Werkzeughälfte erfolgt. Das ist jedoch bei den in Rede stehenden Transportbehältern mit an den Seitenwänden angespritzten Verstärkungsrippen, die sowohl vertikal als auch horizontal verlaufen können und die nach dem Spritzen zum Öffnen des Werkzeugs freigestellt werden müssen, um eine Entformung zu ermöglichen, kaum denkbar.

Denn die Entformung geschieht durch bewegliche Backen. Bei einem Transportbehälter ist für jede Seitenwand eine derartige Backe notwendig, die zum Entformen seitlich vom Formteil wegbewegt wird.

Der flüssige Kunststoff wird standardmäßig über einen Heißkanal verteilt, welcher von den Bodenbereichsanspritzpunkten um die Bodenkante herum zur Seitenwand geführt ist. Sobald zum Entformen die Backe nach aussen bewegt wird, müsste der Verbindungsbereich, der um die Behälterkante herumführt, getrennt werden. Dies ist jedoch nahezu unmöglich, weil bei Spritzdrücken bis zu 2000 bar Dichtigkeitsprobleme auftreten würden.

Daher ist in der nicht vorveröffentlichten Patentanmeldung P 10 2011 103 361.4 vorgeschlagen worden, den Spritzdruck dadurch zu reduzieren, dass beim Einspritzen des flüssigen Kunststoffs der Formhohlraum im Seitenwandbereich erweitert wird, wonach dann die Backen in die eigentliche Formstellung verfahren werden, wodurch der Füllvorgang des Formhohlraums auch in den Seitenwandbereichen optimiert wird.

Der Erfindung liegt die Aufgabe zugrunde, ein Formwerkzeug der oben genannten Art so auszubilden, dass eine weitere signifikante Reduzierung des Spritzdrucks erreicht werden kann und trotzdem ein optimales Füllverhalten bis in den letzten Winkel des Formhohlraums erreicht wird.

Die Erfindung löst diese Aufgabe gemäß dem kennzeichnenden Teil des Anspruchs 1 dadurch, dass die die Aussenbereiche des Behälters formende Werkzeughälfte, die aus einem die Bodenunterseite des Behälters formenenden Teil und aus vier die Aussenflächen der Seitenwände formenden, seitlich verfahrbaren Backen besteht, an der beweglichen Formaufspannplatte und die den Innenbereich des Behälters formende Formwerkzeughälfte an der feststehenden Formaufspannplatte angeordnet ist, wobei in dieser Formwerkzeughälfte von der Angussöffnung ausgehende Angusskanäle sowohl in den Bodenbereich als auch in den Seitenwandbereich des zu spritzenden Behälters laufen.

Mit anderen Worten ist im Gegensatz zum Stand der Technik das Formwerkzeug um 180° gedreht, so dass der die Innenflächen des Behälters formende "Kern" an der feststehenden Formaufspannplatte angeordnet ist und der Kunststoff vom Plastifizier- und Einspritzaggregat über die Angussöffnung durch den Kern in den Formhohlraum eingespritzt wird. Dabei kann ein Kanalsystem so ausgebildet sein, dass eines an einem oder mehreren Anspritzpunkten an der Bodenoberseite und mehrere radial abgehende Kanäle im Innenseitenwandbereich enden.

Durch die Kombination "Formhohlraumvergrößerung beim Einspritzen" und "Einspritzen durch den Kern" können die Spritzdrücke auf ein wesentlich geringeres Maß zurückgefahren werden.

Es ergeben sich hierdurch folgende Vorteile:
Einspritzdrücke werden reduziert,
Schließkräfte werden reduziert, so dass kleinere Maschinen eingesetzt werden können,
Spannungen in den Formteilen werden reduziert, so dass weniger Deformationen auftreten und/oder keine, beziehungsweise verminderte Spannungsrisse beim HDPE auftreten,
es können Rohstoffe verarbeitet werden, welche bisher wegen einer geringen Fließfähigkeit nicht einsetzbar waren. Somit können durch zähe Rohstoffe wesentlich bessere Schlagzähigkeiten bei geringen Temperaturen erreicht werden.

Die Erfindung wird im folgenden anhand von Zeichnungen dargestellt und erläutert.

Es zeigen:
- Fig. 1: eine Spritzgießmaschine in Prinzipdarstellung
- Fig.: in abgebrochener Darstellung eine Schnittansicht eines erfindungsgemäßen Formwerkzeugs
- Fig. 3: in abgebrochener Darstellung eine Schnittansicht eines Formwerkzeugs gemäß Stand der Technik
- Fig. 4: in abgebrochener Darstellung eine Schnittansicht einer alternativen Ausführungsform nach Stand der Technik

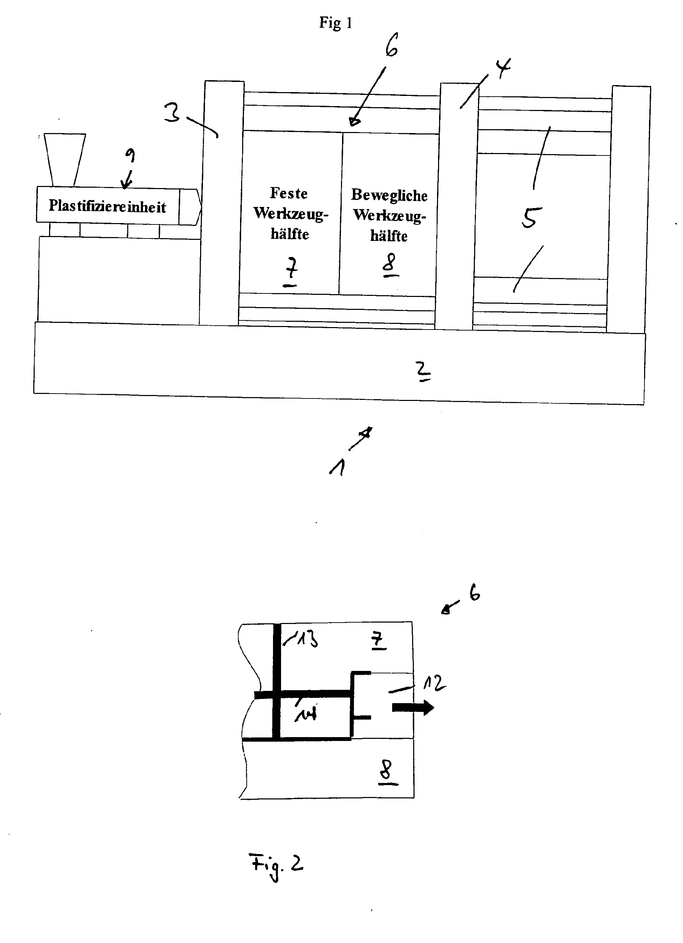

In der Figur 1 ist in perspektivischer Darstellung eine Spritzgießmaschine dargestellt und allgemein mit dem Bezugszeichen 1 versehen.

Sie besteht aus einem Maschinenbett 2, einer darauf angeordneten festen Formaufspannplatte 3 und einer beweglichen Formaufspannplatte 4, die über lediglich angedeutete Druckmittelzylinder 5 in die Geschlossenstellung verfahren wird.

Zwischen den Formaufspannplatten 3 und 4 befindet sich das Formwerkzeug 6, welches aus einer ersten Werkzeughälfte 7 besteht, die an der festen Formaufspannplatte 3 angeordnet ist und einer zweiten Werkzeughälfte 8, die an der beweglichen Formaufspannplatte 4 angeordnet ist. Im Geschlossenzustand des Formwerkzeugs verbleibt eine Formkavität, in die über eine Plastifizier- und Einspritzeinheit 9 durch eine Angussöffnung in der festen Formaufspannplatte 3 der verflüssigte Kunststoff eingespritzt wird.

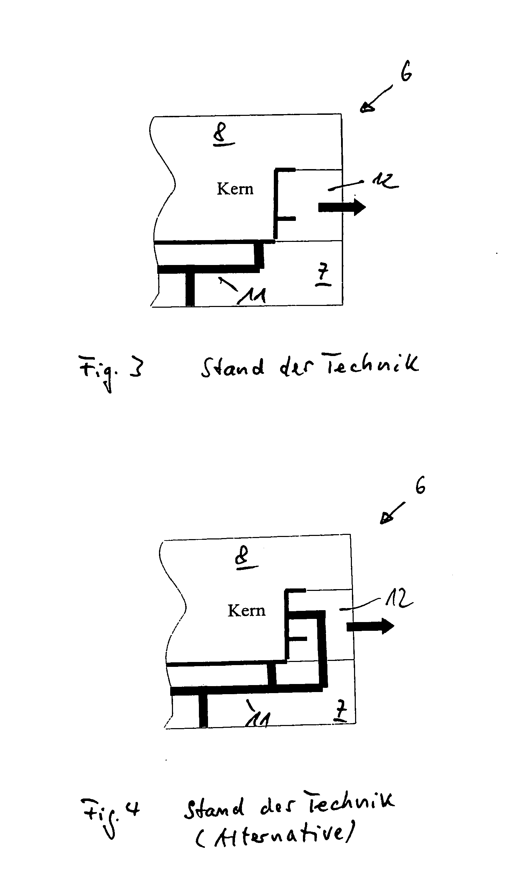

Wie aus der Figur 3 hervorgeht, wird der flüssige Kunststoff standardmäßig über einen Heißkanal 11 derart verteilt, dass in den Eckbereichen der Bodenunterseite des zu spritzenden Formteils mehrere Anspritzpunkte vorhanden sind. Über diese Anspritzpunkte wird aber nicht nur der Boden gespritzt sondern der flüssige Kunststoff muss auch bis in die letzte Kante der Seitenwände dringen können.

Hierzu benötigt es hohe Spritzdrücke und Zuhaltekräfte. Es wurde bereits der Vorschlag gemacht, die die Aussenseitenwände formenden Backen 12 mit Schiebern zu versehen und diese zur Vergrößerung des Formhohlraums seitlich wegzubewegen, so dass der flüssige Kunststoff ungehinderter in diesen Bereich dringen kann, wonach dann die Schieber in die endgültige Formstellung zurückverfahren werden.

Eine weitere Überlegung besteht darin, den Heißkanal 11 derart zu erweitern, dass ein Kanal um die Formlingskante herum bis in den Seitenwandbereich geführt wird, wie es in Figur 4 dargestellt ist.

Sobald die bewegliche Backe 12 nach außen bewegt wird, wird der Verbindungsbereich im Heißkanal 11 getrennt, was zu erheblichen Dichtigkeitsproblemen führen würde.

In der Figur 2 ist die erfindungsgemäße Lösung dargestellt. Das Formwerkzeug 6 wird in der Maschine 1 um 180° gedreht, so dass die Formwerkzeughälfte 7, dessen Kern die Innenflächen des Behälters formt, an der festen Formaufspannplatte 3 angeordnet ist und die zweite Werkzeughälfte 8 mit den Backen 12 an der beweglichen Formaufspannplatte 4.

Von der Angussöffnung in der festen Formaufspannplatte 3 verläuft ein Angusskanal 13 senkrecht bis in den Bodenbereich des zu formenden Formteils, wobei von dem Angusskanal 13 radial waagerecht zu den Seitenwandbereichen des zu formenden Formteils weitere Kanäle 14 abgehen.

Auf diese Weise ergibt sich eine unkomplizierte Führung zu den Anspritzpunkten, die nun alle auf den Innenflächen des zu formenden Formlings münden.

Zusätzlich kann bei dieser Lösung auch das anhand der Figur 3 dargestellte Kavitätsvergrößerungsverfahren angewendet werden.

## Patentansprüche

1. Formwerkzeug für die Herstellung eines Transportbehälters aus Kunststoff in einer Spritzgießmaschine, wobei eine Hälfte des Formwerkzeugs an einer beweglichen Formaufspannplatte und die andere Hälfte an einer feststehenden Formaufspannplatte befestigt ist und die feststehende Formaufspannplatte eine Angussöffnung für ein Plastifizier- und Einspritzaggregat aufweist,
**dadurch gekennzeichnet,**
**dass** die die Aussenbereiche des Behälters formende Formwerkzeughälfte (8), die aus einem die Bodenunterseite des Behälters formenden Teil und aus vier die Aussenflächen der Seitenwände formenden, seitlich verfahrbaren Backen (12) besteht, an der beweglichen Formaufspannplatte (4) und die den Innenbereich des Behälters formende Formwerkzeughälfte (7) an der feststehenden Formaufspannplatte (3) angeordnet ist, wobei in dieser Formwerkzeughälfte (7) von der Angussöffnung ausgehende Angusskanäle (13, 14) sowohl in den Bodenbereich als auch in den Seitenwandbereich des zu spritzenden Behälters verlaufen.

2. Formwerkzeug nach Anspruch 1,
**dadurch gekennzeichnet,**
**dass** die Backen (12) mit Nuten zur Formung von Verstärkungsrippen in den Seitenwänden des Behälters versehen sind.

3. Formwerkzeug nach Anspruch 1 oder 2,
**dadurch gekennzeichnet,**
**dass** in der den Boden formenden Formwerkzeughälfte (8) und/oder in den Backen (12) Schieber zur temporären Kavitätsvergrößerung angeordnet sind.
